(19) Europäisches Patentamt
European Patent Office
Office européen des brevets

(11) EP 2 370 299 B1

(12) **EUROPEAN PATENT SPECIFICATION**

(45) Date of publication and mention
of the grant of the patent:
**06.06.2018 Bulletin 2018/23**

(21) Application number: **09829406.9**

(22) Date of filing: **24.11.2009**

(51) Int Cl.:
*B60W 30/18* (2012.01)     *B60W 10/06* (2006.01)
*F02D 41/10* (2006.01)     *F16D 48/08* (2006.01)
*B60W 10/02* (2006.01)     *B60W 30/192* (2012.01)
*F02D 41/14* (2006.01)     *F02D 41/02* (2006.01)

(86) International application number:
**PCT/SE2009/051324**

(87) International publication number:
**WO 2010/062246 (03.06.2010 Gazette 2010/22)**

(54) **METHOD FOR BRINGING TORQUE REGULATION BACK FROM A LIMITED STATE TO AN UNLIMITED STATE**

VERFAHREN ZUM ZURÜCKFÜHREN EINER DREHMOMENTREGULIERUNG AUS EINEM BEGRENZTEN ZUSTAND IN EINEN UNBEGRENZTEN ZUSTAND

PROCÉDÉ POUR RAMENER UNE RÉGULATION DE COUPLE D'UN ÉTAT LIMITÉ À UN ÉTAT NON LIMITÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.11.2008 SE 0802475**

(43) Date of publication of application:
**05.10.2011 Bulletin 2011/40**

(73) Proprietor: **Scania CV AB (publ)**
**151 87 Södertälje (SE)**

(72) Inventor: **KJELL, Anders**
**S-167 38 Bromma (SE)**

(74) Representative: **Scania CV AB**
**Patents, GP 117kv**
**151 87 Södertälje (SE)**

(56) References cited:
**DE-A1- 19 952 623     DE-A1-102007 056 886**
**US-A- 6 033 342**

**Description**

**TECHNICAL FIELD**

The invention relates generally to the control of vehicle engines and particularly to the control of engine torque after the completion of a clutch engagement process. The invention relates in particular to vehicles which have an automatic clutch and in which the driver's torque demand to the control unit/engine is automatically limited during the clutch engagement process and the control of the torque reverts to the driver as a function of the degree of depression of the accelerator pedal.

**TECHNICAL BACKGROUND**

Modern vehicle engines are usually provided with engine control units which regulate by the position to which the accelerator pedal is depressed the torque which is delivered by the vehicle's engine. For vehicles provided with an automatic clutch it is not unusual for the engine's torque to be limited automatically during the clutch engagement process. The accelerator pedal then serves primarily as a clutch pedal in that it mainly acts upon the clutch engagement process. The engine torque is limited during the time when the clutch slips, to facilitate the clutch engagement process, and the accelerator pedal's depression position at that time does not correspond to the actual engine torque delivered. The limitation of the torque is applied in order to achieve a more comfortable clutch engagement process and minimise the wear on the various mechanical parts of the clutch. Setting in motion a vehicle with an automatic clutch therefore does not involve using the whole of the torque which the driver demands from the engine by depressing the accelerator pedal.

When the clutch has stopped slipping, i.e. when the slip or the relative speed across the clutch is nil or close to nil, the clutch engagement process is regarded as completed. A clutch is usually spring-loaded and there is normally a certain small relative, positive or negative, movement between flywheel and clutch plates. For this reason the slip will seldom be absolutely nil. When the clutch engagement process has been completed, the regulation of the torque delivered by the engine reverts from being controlled by the automatically regulated "limited engine torque" to being controlled by the driver via the accelerator pedal's depression position.

It is desirable that the driver should sense that there is a correlation between power mobilised and engine torque delivered, and that the vehicle should, as soon as possible after the clutch engagement process, behave as if it has no engine torque limitation, i.e. the degree of depression of the accelerator pedal should be in relation to the torque delivered by the engine.

However, when the clutch engagement process has been completed and the clutch has stopped slipping there is normally a difference, an "error", between the "engine torque requested" by the driver and the "limited engine torque" generated by the control unit. As the torque delivered by the engine has been controlled by the "limited engine torque", the error has somehow to be eliminated to enable the driver to resume full control and control the engine torque via the accelerator pedal as in normal driving.

There are various ways of eliminating the error or difference. A known way of bringing the regulation back to "engine torque requested" by the driver after the clutch has stopped slipping is to quite simply increase the value step by step or in a linear manner from the current "limited engine torque" to "engine torque requested". This unfortunately has undesirable effects, e.g. that the vehicle gradually accelerates without the driver so wishing and without the driver changing the position of the accelerator pedal.

This may entail problems when the driver needs to drive the vehicle with precision, e.g. setting the vehicle in motion gently in situations where the driver considers it desirable or necessary. Such may for example be the case on slippery road surfaces or if the vehicle has to be backed in towards a loading bay or some other similar situation. If the road surface is slippery and the vehicle is on, for example, an upgrade and the engine torque increases by itself, it will be readily appreciated that the vehicle may begin to slip or spin freely and slide uncontrollably. With a heavily laden vehicle this may be quite dangerous and lead to a near-accident.

With known systems it is therefore possible for the "engine torque requested" applied by the driver via the accelerator pedal to be modified by factors beyond his/her direct control. Such factors comprise the engine's speed and its turbo pressure. This relates to the fact that heavy vehicles usually have diesel engines with a torque characteristic such that they are not powerful at low engine speeds, i.e. the engine speeds applied when setting the vehicle in motion, but are more powerful at the engine speeds applied in normal driving. When the engine's speed gradually increases by the vehicle accelerating after the clutch has stopped slipping, the torque delivered by the engine will increase despite the accelerator pedal position not being altered by the driver.

Various previous solutions are known for controlling the engine torque in vehicles with automatic clutches.

US 6033342 discloses a drive train arrangement for a motor vehicle driven by an internal combustion engine. The engine output or torque of the internal combustion engine is controllable by means of an engine output control via a user-operated accelerator pedal. A friction-gearshift clutch is arranged in the torque transmission path of the internal combustion engine. To allow the friction-gearshift clutch to be designed for reduced transmission reliability, a slip control reduces the engine output or torque of the internal combustion engine for a time-limited period via the engine output control when the friction-gearshift clutch slips in its fully engaged state. To this end, the slip control responds to a clutch position sensor that detects the engagement position of the friction-gearshift clutch, and to speed sensors that detect the input and output speeds of the friction-gearshift clutch.

US4081065 refers to a method for setting a vehicle in motion from standstill. That method controls the slipping process during the engagement of the mechanical parts of an automatic clutch. The engine torque is thus regulated as a function of the depression of the accelerator pedal, which means that the driver is regarded as being able to control the process. The method relates, however, to regulation during the actual clutch engagement process and involves a direct relationship between accelerator pedal position and engine torque. The method according to the present invention relates to the control of engine torque after a clutch engagement process has been completed and is affected by the difference between "engine torque requested" and "limited engine torque".

GB2225076 refers to a method for achieving increased torque and providing the driver with better control during driving. That method utilises the kinetic rotation energy present in an engine during operation and brings it back to the powered wheels when clutch operation/gear changing takes place. The speed of bringing the energy back is related to the accelerator pedal position so that the driver will have the sensation of having good control, and the torque will change in relation to the accelerator pedal position. This technique only works so long as the clutch is slipping, i.e. when there is a relative velocity across the clutch. In contrast, the object of the present invention is to only bring the regulation back when there is no slip across the clutch, i.e. when the slip is close to nil.

US5206805 refers to a method for achieving more effective clutch engagement based on it being possible in certain circumstances for the torque generated by the vehicle to cause the engine to reach undesirable working levels. The system controls the speed of the engine by regulating the clutch engagement force during the slipping phase of the clutch engagement. The engagement force is regulated on the basis of a predetermined pattern based on driver-requested torque and clutch slip. The present invention is intended to control the engine torque when the clutch engagement process has been completed and the clutch is therefore not slipping.

The state of the art thus substantially describes various ways of controlling the engine torque during the actual clutch engagement process, whereas the present invention does not affect the torque during the clutch engagement process. Nor does the state of the art indicate any method which controls the engine's torque on the basis of current relationship between the "limited engine torque" and the "driver-requested torque".

## OBJECTS AND MOST IMPORTANT CHARACTERISTICS OF THE INVENTION

The object of the invention is to solve the aforesaid problems and propose a method which provides the driver, after the clutch engagement process has been completed, with better control over the torque delivered by the engine to the vehicle's powered wheels, in such a way that the he/she senses a correspondence between power mobilisation and the torque delivered by the engine.

A further object of the invention is to propose a method which brings the regulation of the engine's torque back from the control system to the accelerator pedal without the disadvantages associated with the state of the art, so that the "limited engine torque" is quickly adapted to the same level as the "driver-requested torque", after the control system has limited the engine torque during the clutch engagement process in a vehicle with an automatic clutch.

A further object of the invention is to propose a method which, after a clutch engagement process, provides increased engine control over the vehicle when, for the example, setting the vehicle in motion on a slippery road surface or executing some other precise manoeuvre of the vehicle, and which increases the driver's control over how much engine torque is to be delivered.

A further object of the invention is to propose a method which prevents the engine torque from increasing by itself without the driver altering the accelerator pedal's depression position.

The aforesaid and further objects are achieved according to the invention by a method, a computer programme and a computer-readable medium according to the features indicated in claims 1, 9 and 10.

Accordingly, at least some of the objects are achieved by a method for controlling the torque delivered by the engine in a vehicle with an automatic clutch according to claim 1. The invention thus relates to a method for regulating the engine's torque which it makes it possible for the driver to exercise control over the torque which is transmitted to the vehicle's powered wheels even immediately after a clutch engagement process has been carried out. The invention means that only when a change in accelerator pedal position is effected by the driver does the torque delivered by the engine change. The change in the engine torque is in relation to the change in accelerator pedal position and is calculated as the difference between "engine torque requested" and "limited engine torque" divided by unutilised accelerator pedal depression. It is therefore not the absolute accelerator pedal position which will decide what torque the engine will deliver, and so long as the accelerator pedal is kept in the same position the engine will be caused to deliver a substantially constant torque.

Further features and advantages of the invention are indicated by the more detailed description of the invention set out below and the attached drawings and other claims.

## BRIEF LIST OF THE DRAWINGS

The invention is described below in more detail in the form of some preferred embodiment examples with reference to the attached drawings.

**Figure 1** depicts a diagram of an example of how various parameters in the control system interact during regulation according to the invention and upon depression of the accelerator pedal.

**Figure 2** depicts a flowchart of the central process steps according to the invention.

**Figure 3** depicts schematically a block diagram of the vehicle components which are involved in making it possible for the method according to the invention to be implemented.

## DESCRIPTION OF PREFERRED EMBODIMENT EXAMPLES

The invention thus relates to a method for control and regulation of vehicle engines and particularly for controlling the torque delivered from engines in vehicles which have an automatic clutch, the vehicle's control system automatically limits the engine torque requested by the driver during the clutch engagement process, and the regulation, after the clutch engagement process has been completed, will revert to the driver and be effected in relation to the degree of depression of the accelerator pedal.

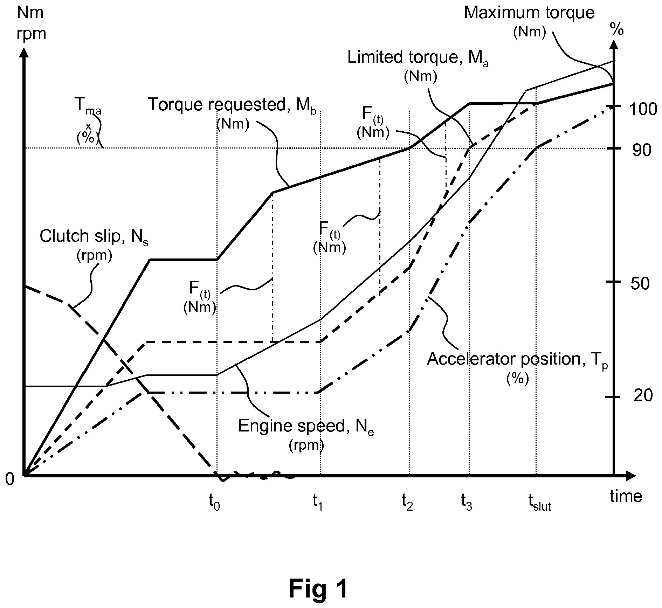

**Figure 1** depicts a diagram of how various engine, clutch and gearbox parameters interact during the regulation of the engine torque according to the invention. The curves represent the values of the various parameters at each moment as a function of time, their values being plotted on the vertical axis and time on the horizontal axis. The curves represent "limited engine torque", $M_a$ (Engine Request Torque Limit), which is a request to the engine's control unit to limit the engine's driving force/torque, "engine torque requested" $M_b$ (Driver Demand Torque), which is the torque desired/called for by the driver by depressing the accelerator pedal, the accelerator pedal position $T_P$ in percent, the engine speed $N_e$ and the clutch "slip" $N_s$, which is the relative speed across the vehicle's clutch.

The error $F_{(t)}$ is a difference which changes over time and has to be eliminated as quickly as possible after completion of a clutch engagement process in order to achieve the effect according to the invention. The error $F_{(t)}$ is the difference between "engine torque requested" $M_b$ and "limited engine torque" $M_a$.

At time to the diagram shows that the clutch has stopped slipping, the "slip" $N_s$ being nil or very close to nil. In this situation the engine begins to increase its speed, resulting in the "engine torque requested" $M_b$ by the driver also beginning to increase. The "limited engine torque" $M_a$, which is the torque actually delivered by the engine, will remain constant so long as the driver keeps the accelerator pedal in the same position.

If for example the driver begins to release the accelerator pedal, the percentage difference between "limited engine torque" $M_a$ and "engine torque requested" $M_b$ is maintained, and when the accelerator pedal is fully released the "limited engine torque" $M_a$ and the "engine torque requested" $M_b$ become equal at nil or close to nil. The calculation process works in a similar way when the accelerator pedal is depressed as when it is released, and the torque limitation also ends when the accelerator pedal is fully released. The engine's torque thus decreases gradually when the driver begins to release the accelerator pedal. The calculation for the torque limitation upon release of the accelerator pedal partly involves other limit values and will not be described in more detail here.

The vehicle's accelerator pedal may be regulated mechanically between the two extreme positions of being fully released, i.e. not being acted upon at all, and being fully depressed, so possible positions may be indicated in terms of a degree of depression ranging from 0 to 100 percent. The accelerator pedal may be calibrated so that the active, controllable, range comprises for example all positions between 10 and 90 percent, the "control range", of the pedal's mechanically possible travel. 10% is then the minimum limit $T_{min}$ and 90% the maximum limit $T_{max}$. At a higher percentage accelerator pedal position, i.e. between 90 and 100 percent, the "limited engine torque" $M_a$ is affected by change in position of the accelerator pedal, since the torque limitation of the engine ceases at an accelerator pedal position $T_p$ of 90 percent. Accelerator pedal positions over 90 percent do however act upon/increase the "engine torque requested" $M_b$ by the driver, which within the range actually controls the engine torque.

The control range of the accelerator pedal is divided by a customary industrial standard into 250 steps. If the whole range or travel of 0-100 percent is used, each step corresponds to an accelerator pedal position change of 0.4 percent. Each time the accelerator pedal position $T_p$ changes by at least one step, the "limited engine torque" $M_a$ changes to a corresponding extent. When the accelerator pedal is pressed down to its maximum position $T_{max}$, the error $F_{(t)}$ will be nil or virtually nil and the value for "limited engine torque" $M_a$ should correspond to the value for "engine torque requested" $M_b$.

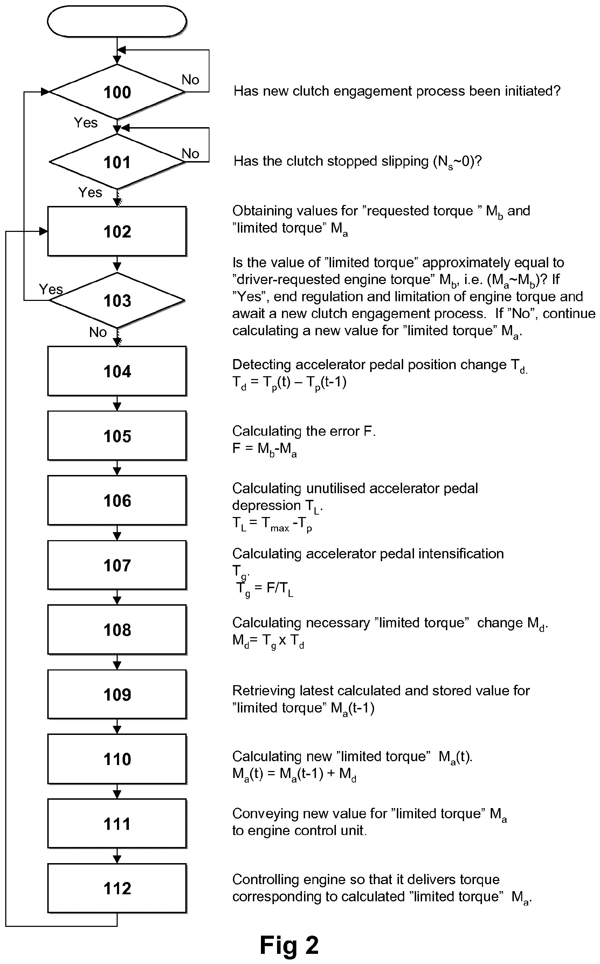

**Figure 2** depicts a flowchart of the central process steps which are performed after the clutch engagement process has been completed and as soon as a change in the accelerator pedal position $T_p$ is detected. The fact that the clutch engagement process has been completed is established by the "slip" $N_s$, i.e. the relative speed across the clutch, being nil or very close to nil. This is determined, for example, by the engine's speed on the engine output shaft being compared with the speed on the gearbox input shaft. When the difference in speed is nil or very close to nil, the clutch engagement process is regarded as completed. During the clutch engagement process, the torque delivered by the engine is controlled by the engine control system on the basis of the "limited engine torque" $M_a$ and therefore not by "engine torque requested" $M_b$.

The process steps are summarised as follows:

100. Identify whether a new clutch engagement process has been initiated. If so, go on to next process step.
101. Check whether the clutch has stopped slipping, i.e. whether the "slip" $N_s$ across the clutch is nil. If so, go on to next process step.
102. Take current values for "engine torque requested" $M_b$ and "limited engine torque" $M_a$. "Engine torque requested" $M_b$ is taken from the engine control unit and is affected inter alia by the accelerator pedal position $T_p$. "Limited engine torque" $M_a$ is generated initially by the engine control unit during the clutch engagement process and is therefore taken the first time from the engine control unit. Thereafter "limited engine torque" $M_a$ is calculated according to this process and is stored in a memory.
103. Compare "limited engine torque" $M_a$ with "engine torque requested" $M_b$. If the difference in torque is below a predetermined limit value, e.g. below 10 Nm, the difference is regarded as so small that the system's regulation of the "limited engine torque" $M_a$ to "engine torque requested" $M_b$ ends and the process goes back to process step 100. The control of the engine's torque thus changes to being affected by the accelerator pedal's depression position $T_p$. This continues until a new clutch engagement process is initiated. If the difference between said values is greater than the predetermined limit value, go on to next process step.
104. Detection of an accelerator pedal position change $T_d$. When a change of at least one step takes place, identify the change and go on to next process step. Only a change in the accelerator pedal position will cause a change in the "limited engine torque" $M_a$.
105. Calculation of the error **F**. F is calculated as the difference in torque between "engine torque requested" $M_b$ and "limited engine torque" $M_a$. The value of **F** is stored in a memory.
106. Calculation of remaining, unutilised, accelerator pedal depression $T_L$. Unutilised accelerator pedal depression $T_L$ corresponds to the difference between maximum accelerator pedal position $T_{max}$ and current accelerator pedal position $T_p$.
107. Calculation of the accelerator pedal position intensification $T_g$. This is calculated as the error **F** divided by unutilised accelerator pedal depression $T_L$.
108. Calculation of necessary "limited engine torque" change $M_d$ for eliminating the error **F** at accelerator pedal maximum depression $T_{max}$. This is calculated as the accelerator pedal intensification $T_g$ multiplied by the accelerator pedal position change $T_d$.
109. Retrieval of latest calculated and stored value for "limited engine torque" $M_a$.
110. Calculation of new "limited engine torque" $M_a$ by applying to the previous "limited engine torque" $M_a$ the desired "limited engine torque" change $M_d$. The new value for "limited engine torque" $M_a$ is stored in a memory.
111. Transfer to the engine control unit of current value for "limited engine torque" $M_a$.
112. Control of the engine so that a torque corresponding to the calculated "limited engine torque" $M_a$ is delivered. Go back thereafter to process step 102.

The process steps are thus performed from 100 to 112 and proceed thereafter in a loop between 102 and 112 until the "limited engine torque" $M_a$ reaches the value of the "engine torque requested" $M_b$.

The calculation of current value for "limited engine torque" $M_a$ may also be summarised by the following formula:

$$M_a(t) = M_a(t-1) + \frac{M_b * (T_P(t) - T_P(t-1)}{(T_{max} - T_P(t)) * M_a(t-1)}$$

The following practical example is based on the method according to the invention. If immediately after the clutch engagement process has been completed the driver depresses the accelerator pedal to, for example, 40 percent, the error **F** is calculated by taking and subtracting from one another the current values for "limited engine torque" $M_a$ and "engine torque requested" $M_b$. The resulting error **F** should be nil when the driver depresses the accelerator pedal fully, i.e. to the accelerator pedal's maximum position $T_{max}$, which in the case depicted at $T_{slut}$ corresponds to the 90 percent accelerator pedal position. If the error $F$ is for example 100 Nm, this should therefore decrease with increased accelerator pedal depression. Since an accelerator pedal position of 90 percent is the maximum position $T_{max}$ and 40 percent is the current accelerator pedal position $T_p$, the result is an unutilised accelerator pedal depression $T_L$ of 50 percent. The whole error $F$ of 100 Nm has therefore to be distributed over an unutilised accelerator pedal depression $T_L$ of 50 percent. For each percent by which the driver depresses the accelerator pedal, the "limited engine torque" $M_a$ has to increase by 2 Nm.

The calculation of and change in "limited engine torque" $M_a$ takes place continuously over and over again until the value rises to "engine torque requested" $M_b$. During the calculation process, "engine torque requested" $M_b$ may increase by itself as a result of increasing engine speed, increasing turbo pressure or some other cause by which the total error $F$ may suddenly increase, e.g. to 120 Nm instead of 100 Nm. This entails a change in the intensification value $T_g$ per percent of the accelerator pedal position change $T_d$ in the calculation process. It will still be the case that when the driver depresses the accelerator pedal to 90 percent, the error $F$ should be nil and therefore the value for "limited engine torque" $M_a$ should be equal to the value for "engine torque requested" $M_b$.

If the driver keeps the accelerator pedal stationary, the torque delivered by the engine will therefore not increase. The error $F$ is nevertheless allowed to increase. This is illustrated in Figure 1 between the time points to and ti. The change in "limited engine torque" $M_a$ thus happens only when the position of the accelerator pedal changes, as illustrated at time $t_1$ in Figure 1. The increase is related to the accelerator pedal position change $T_d$. This makes it possible for the driver to affect when and by how much the engine torque may increase. If the accelerator pedal depression causes a torque increase which is larger than the predetermined derivative, as illustrated at $t_2$ in the diagram, the torque increase will be limited to a maximum number of Nm per second. This maximum torque increase may change, e.g. depending on whether the road surface is slippery or not. One way for the system to automatically receive an indication as to whether the road surface is slippery, and hence to apply a lower maximum torque increase, is, for example, if the vehicle's differential lock is activated when the vehicle is being set in motion.

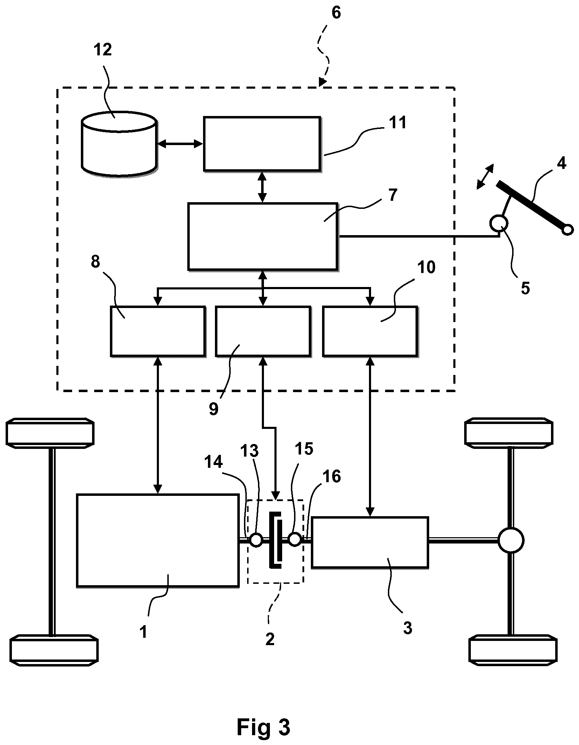

**Figure 3** depicts schematically a block diagram of the units which form part of the system for making it possible to implement the method according to the invention. The vehicle is schematically depicted with an engine **1**, a clutch **2** and a gearbox **3**. An accelerator pedal **4** provided with a sensor **5,** e.g. a potentiometer, is adapted to detecting the power mobilised by the driver. A control unit **6** comprises a central electronic unit (ECU) **7** connected to a control unit **8** for the engine, a control unit **9** for the clutch and a control unit **10** for the gearbox. A calculation unit **11** is adapted to performing calculations according to the method according to the invention and takes data from a memory **12** and from other parts of the control unit **6**. The relative speed across the clutch **2** is detected by, for example, a sensor **13** provided on the output shaft **14** of the engine and a sensor **15** arranged on the input shaft **16** of the gearbox **3.**

It is generally the case that the signals for the accelerator pedal position $T_p$, engine speed $N_e$, slip $N_s$ and "engine torque requested" $M_b$ need to be available to the unit which performs the calculation according to the invention. There is however no requirement that the calculation be performed in a particular part of the vehicle. The key requirement is that the unit has access to the signals and can at the same time itself limit the engine's torque or convey a control signal to a unit which can directly limit the engine torque.

In an alternative embodiment example, the calculation according to the invention is performed in the gearbox control unit **10**, in which case the internal memory normally provided in the control unit **10** is also used.

The signal from the accelerator pedal **4** which represents the position of the accelerator pedal is supplied to the central electronic unit **7,** which then processes and conveys the signal to the engine control unit **8** and the gearbox control unit **10**. The engine control unit **8** calculates "engine torque requested" $M_b$ and the gearbox control unit **10** calculates "limited engine torque" $M_a$. The value for "limited engine torque" $M_a$ is conveyed to the engine control unit **8,** which effects the limitation of the engine's torque on the basis of the value being lower than the value for "engine torque requested" $M_b$. When the value for "limited engine torque" $M_a$ approximately corresponds to "engine torque requested" $M_b$, the control of the engine's torque is based solely on "engine torque requested" $M_b$.

The invention is described above with reference to some preferred embodiments. The invention is of course not limited to those embodiments, which are only to be regarded as examples. Other embodiments of the invention are therefore also perfectly possible within the scope of protection of the attached claims. Thus it is possible to incorporate a regulating function which causes the torque limitation, i.e. "limited engine torque", to become gradually closer to the value for "engine torque requested" if the driver does not within a reasonable time depress the accelerator pedal to its maximum position. Running the engine with torque limitation for a long time is thereby prevented.

**Claims**

1.  A method for controlling the torque delivered by the engine in a vehicle with an automatic clutch:

- from a state in which torque limitation is applied during a clutch engagement process,
- to a state in which the torque limitation, after completion of the clutch engagement process, decreases and eventually totally ceases,

wherein bringing a "limited engine torque" ($M_a$), which is the torque actually delivered by the engine based on a request to the engine's control system to limit the engine's driving torque, gradually back to "engine torque requested" ($M_b$), which is the torque requested by the driver by depressing an accelerator pedal, based on the difference between "engine torque requested" ($M_b$) and the "limited engine torque" ($M_a$) delivered from the engine, and on current accelerator pedal position ($T_p$),
**characterised in that**, the "limited engine torque" ($M_a$) changes only when there is a change in the accelerator pedal position ($T_p$).

2. A method according to claim 1,
   **characterised by**

   - ending the torque limitation, i.e. causing "engine torque requested" ($M_b$) to equal "limited engine torque" ($M_a$), when no unutilised accelerator pedal depression ($T_L$) remains, wherein unutilised accelerator pedal depression ($T_L$) corresponds to the difference between maximum accelerator pedal position ($T_{max}$) and current accelerator pedal position ($T_p$), or when the accelerator pedal (4) is fully released to an undepressed position ($T_{min}$).

3. A method according to any one of the foregoing claims,
   **characterised by**

   - detecting an accelerator pedal position change ($T_d$),
   - calculating an error (F) as the difference between "engine torque requested" ($M_b$) and "limited engine torque" ($M_a$),
   - calculating unutilised accelerator pedal depression ($T_L$), wherein unutilised accelerator pedal depression (TL) corresponds to the difference between maximum accelerator pedal position (Tmax) and current accelerator pedal position (Tp),
   - calculating current accelerator pedal intensification ($T_g$),
   - calculating current "limited engine torque" ($M_a$),
   - controlling the engine's torque on the basis of the current value of "limited engine torque" ($M_a$).

4. A method according to any one of the foregoing claims,
   **characterised by**

   - eliminating the error (F) so that the difference between "engine torque requested" ($M_b$) and "limited engine torque" ($M_a$) is regulated towards nil at maximum accelerator pedal position ($T_{max}$).

5. A method according to any one of the foregoing claims,
   **characterised by**

   - calculating the accelerator pedal intensification ($T_g$) as the error (F) divided by unutilised accelerator pedal depression ($T_L$), wherein unutilised accelerator pedal depression (TL) corresponds to the difference between maximum accelerator pedal position (Tmax) and current accelerator pedal position (Tp).

6. A method according to any one of the foregoing claims,
   **characterised by**

   - calculating a change in "limited engine torque" ($M_a$) as the accelerator pedal intensification ($T_g$) multiplied by the accelerator pedal position change ($T_d$).

7. A method according to any one of the foregoing claims,
   **characterised by**

   - calculating a new "limited engine torque" ($M_a$) by applying to the previous value for "limited engine torque" ($M_a$) the value for "limited engine torque" change ($M_d$).

8. A computer programme loadable into an internal memory in a computer,
**characterised in**

- **that** it comprises programme code for performing method steps according to any one of claims 1-7.

9. A computer-readable medium,
**characterised in**

- **that** it comprises at least part of the programme code in the computer programme according to claim 8.

**Patentansprüche**

1. Verfahren zum Steuern des von dem Motor in einem Fahrzeug mit einer automatischen Kupplung gelieferten Drehmoments:

- von einem Zustand, in welchem eine Drehmomentbegrenzung während eines Einkuppelvorgangs angewendet wird,
- zu einem Zustand, in welchem die Drehmomentbegrenzung nach Abschluss des Einkuppelvorgangs abnimmt und schließlich vollständig endet,

wobei ein "begrenztes Motordrehmoment" ($M_a$), welches das von dem Motor auf der Grundlage einer Anforderung an das Steuersystem des Motors, das Antriebsdrehmoment des Motors zu begrenzen, tatsächlich geliefertes Drehmoment ist, graduell wieder auf ein "angefordertes Motordrehmoment" ($M_b$) gebracht wird, welches das von dem Fahrer durch Niederdrücken eines Beschleunigungspedals angeforderte Drehmoment ist, auf der Grundlage einer Differenz zwischen dem "angeforderten Motordrehmoment" ($M_b$) und dem von dem Motor gelieferten "begrenzten Motordrehmoment" ($M_a$) sowie einer momentanen Beschleunigungspedal-Position ($T_p$),
**dadurch gekennzeichnet, dass**
sich das "begrenzte Motordrehmoment" ($M_a$) nur ändert, wenn eine Änderung der Beschleunigungspedal-Position ($T_p$) vorliegt.

2. Verfahren gemäß Anspruch 1,
**gekennzeichnet durch**

- ein Beenden der Drehmomentbegrenzung, d. h. ein Verursachen, dass das "angeforderte Motordrehmoment" ($M_b$) dem "begrenzten Motordrehmoment" ($M_a$) gleicht, wenn kein ungenutztes Beschleunigungspedal-Niederdrücken ($T_L$) verbleibt, wobei ungenutztes Beschleunigungspedal-Niederdrücken ($T_L$) der Differenz zwischen einer maximalen Beschleunigungspedal-Position ($T_{max}$) und einer momentanen Beschleunigungspedal-Position ($T_P$) entspricht, oder wenn das Beschleunigungspedal (4) zu einer nicht niedergedrückten Position ($T_{min}$) freigegeben ist.

3. Verfahren gemäß einem der vorhergehenden Ansprüche,
**gekennzeichnet durch**

- Erkennen einer Beschleunigungspedal-Positionsänderung ($T_d$),
- Berechnen eines Fehlers (F) als die Differenz zwischen dem "angeforderten Motordrehmoment" ($M_b$) und dem "begrenzten Motordrehmoment" ($M_a$),
- Berechnen eines ungenutzten Beschleunigungspedal-Niederdrückens ($T_L$), wobei ein ungenutztes Beschleunigungspedal-Niederdrücken ($T_L$) der Differenz zwischen der maximalen Beschleunigungspedal-Position ($T_{max}$) und der momentanen Beschleunigungspedal-Position ($T_P$) entspricht,
- Berechnen einer momentanen Beschleunigungspedal-Intensivierung ($T_G$),
- Berechnen eines momentanen "begrenzten Motordrehmoments" ($M_a$),
- Steuern des Drehmoments des Motors auf der Grundlage des momentanen Werts des "begrenzten Motordrehmoments" ($M_a$).

4. Verfahren gemäß einem der vorhergehenden Ansprüche,
**gekennzeichnet durch**

- Beseitigen des Fehlers (F), sodass die Differenz zwischen dem "angeforderten Motordrehmoment" ($M_b$) und dem "begrenzten Motordrehmoment" ($M_a$) auf null geregelt wird bei maximaler Beschleunigungspedal-Position ($T_{max}$).

5. Verfahren gemäß einem der vorhergehenden Ansprüche,
**gekennzeichnet durch**

- Berechnen der Beschleunigungspedal-Intensivierung ($T_G$) als den Fehler (F) geteilt durch das ungenutzte Beschleunigungspedal-Niederdrücken ($T_L$), wobei ungenutztes Beschleunigungspedal-Niederdrücken ($T_L$) der Differenz zwischen einer maximalen Beschleunigungspedal-Position ($T_{max}$) und einer momentanen Beschleunigungspedal-Position ($T_P$) entspricht.

6. Verfahren gemäß einem der vorhergehenden Ansprüche,
**gekennzeichnet durch**

- Berechnen einer Änderung des "begrenzten Motordrehmoments" ($M_a$) als die Beschleunigungspedal-Intensivierung ($T_G$) multipliziert mit der Beschleunigungspedal-Positionsänderung ($T_d$).

7. Verfahren gemäß einem der vorhergehenden Ansprüche,
**gekennzeichnet durch**

- Berechnen eines neuen "begrenzten Motordrehmoments" ($M_a$) durch Anwenden des Werts der "begrenzten Motordrehmoment"-Änderung ($M_d$) auf den vorherigen Wert des "begrenzten Motordrehmoment" ($M_a$).

8. Computerprogramm, das in einen internen Speicher in einem Computer geladen werden kann,
**dadurch gekennzeichnet,**

- **dass** es Programmcode zum Durchführen von Verfahrensschritten gemäß einem der Ansprüche 1 bis 7 umfasst.

9. Computerlesbares Medium,
**dadurch gekennzeichnet,**

- **dass** es zumindest einen Teil des Programmcodes in dem Computerprogramm gemäß Anspruch 8 umfasst.

**Revendications**

1. Procédé de commande du couple fourni par le moteur dans un véhicule équipé d'un embrayage automatique :

- depuis un état dans lequel une limitation de couple est appliquée durant un processus d'enclenchement de l'embrayage,
- à un état dans lequel la limitation de couple, après achèvement du processus d'enclenchement de l'embrayage, diminue et finalement cesse totalement,

dans lequel un « couple moteur limité » ($M_a$), qui est le couple réellement fourni par le moteur sur la base d'une demande au système de commande du moteur pour limiter le couple d'entraînement du moteur, est ramené progressivement à un « couple moteur requis » ($M_b$), qui est le couple demandé par le conducteur en enfonçant une pédale d'accélérateur, sur la base de la différence entre le « couple moteur requis » ($M_b$) et le « couple moteur limité » ($M_a$) fourni par le moteur, et de la position actuelle de la pédale d'accélérateur ($T_p$),
**caractérisé en ce que**
le « couple moteur limité » ($M_a$) varie uniquement en cas de changement dans la position de la pédale d'accélérateur ($T_p$).

2. Procédé selon la revendication 1, **caractérisé par** l'étape de :

- mettre fin à la limitation de couple, c-à-d. rendre le « couple moteur requis » ($M_b$) égal au « couple moteur limité » ($M_a$) lorsqu'il ne subsiste aucun enfoncement inutilisé ($T_L$) de la pédale d'accélérateur, l'enfoncement inutilisé ($T_L$) de la pédale d'accélérateur correspondant à la différence entre la position maximale (**$T_{max}$**) de la pédale d'accélérateur et la position actuelle ($T_p$) de la pédale d'accélérateur, ou bien lorsque la pédale d'accélérateur (4) est totalement relâchée dans une position non enfoncée ($T_{min}$).

3. Procédé selon l'une quelconque des revendications précédentes, **caractérisé par** les étapes suivantes :

   - détecter un changement de position de la pédale d'accélérateur ($T_d$),
   - calculer une erreur (F) comme une différence entre le « couple moteur requis » ($M_b$) et le « couple moteur limité » ($M_a$),
   - calculer l'enfoncement inutilisé ($T_L$) de la pédale d'accélérateur, enfoncement inutilisé ($T_L$) de la pédale d'accélérateur correspondant à la différence entre la position maximale ($T_{max}$) de la pédale d'accélérateur et la position actuelle ($T_p$) de la pédale d'accélérateur,
   - calculer l'intensification ($T_g$) actuelle de la pédale d'accélérateur,
   - calculer le « couple moteur limité » ($M_a$) actuel,
   - commander le couple du moteur sur la base de la valeur actuelle du « couple moteur limité » ($M_a$).

4. Procédé selon l'une quelconque des revendications précédentes, **caractérisé par** l'étape de :

   - éliminer l'erreur (F) de façon que la différence entre le « couple moteur requis » ($M_b$) et le « couple moteur limité » ($M_a$) soit amenée à zéro à la position maximale ($T_{max}$) de la pédale d'accélérateur.

5. Procédé selon l'une quelconque des revendications précédentes, **caractérisé par** l'étape de :

   - calculer l'intensification ($T_g$) de la pédale d'accélérateur comme l'erreur (F) divisée par l'enfoncement inutilisé ($T_L$) de la pédale d'accélérateur, l'enfoncement inutilisé ($T_L$) de la pédale d'accélérateur correspondant à la différence entre la position maximale ($T_{max}$) de la pédale d'accélérateur et la position actuelle ($T_p$) de la pédale d'accélérateur.

6. Procédé selon l'une quelconque des revendications précédentes, **caractérisé par** l'étape de :

   - calculer une modification du « couple moteur limité » ($M_a$) comme l'intensification ($T_g$) de la pédale d'accélérateur multipliée par le changement de position ($T_d$) de la pédale d'accélérateur.

7. Procédé selon l'une quelconque des revendications précédentes, **caractérisé par** l'étape de :

   - calculer un nouveau « couple moteur limité » ($M_a$) en appliquant à la valeur précédente du « couple moteur limité » ($M_a$) la valeur de la modification ($M_d$) du « couple moteur limité ».

8. Programme informatique chargeable dans une mémoire interne d'un ordinateur, **caractérisé**

   - **en ce qu'**il comprend un code de programme pour exécuter les étapes du procédé selon l'une quelconque des revendications 1 à 7.

9. Support lisible par ordinateur, **caractérisé**

   - **en ce qu'**il comprend au moins une partie du code de programme du programme informatique selon la revendication 8.

**Fig 1**

Has new clutch engagement process been initiated?

Has the clutch stopped slipping ($N_s \sim 0$)?

Obtaining values for "requested torque " $M_b$ and "limited torque" $M_a$

Is the value of "limited torque" approximately equal to "driver-requested engine torque" $M_b$, i.e. ($M_a \sim M_b$)? If "Yes", end regulation and limitation of engine torque and await a new clutch engagement process. If "No", continue calculating a new value for "limited torque" $M_a$.

Detecting accelerator pedal position change $T_d$.
$$T_d = T_p(t) - T_p(t-1)$$

Calculating the error F.
$$F = M_b - M_a$$

Calculating unutilised accelerator pedal depression $T_L$.
$$T_L = T_{max} - T_p$$

Calculating accelerator pedal intensification $T_g$.
$$T_g = F/T_L$$

Calculating necessary "limited torque" change $M_d$.
$$M_d = T_g \times T_d$$

Retrieving latest calculated and stored value for "limited torque" $M_a(t-1)$

Calculating new "limited torque" $M_a(t)$.
$$M_a(t) = M_a(t-1) + M_d$$

Conveying new value for "limited torque" $M_a$ to engine control unit.

Controlling engine so that it delivers torque corresponding to calculated "limited torque" $M_a$.

# Fig 2

**Fig 3**

**EP 2 370 299 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6033342 A
- US 4081065 A
- GB 2225076 A
- US 5206805 A